# EUROPEAN PATENT APPLICATION

(11) **EP 4 516 435 A1**
(43) Date of publication of application: **05.03.2025**
(21) Application number: 22939914.2
(22) Date of filing: 06.12.2022
(51) Int. Cl.: B23B 19/02, B23Q 11/12

(54) **DIRECT DRIVE SPINDLE HAVING REAR MOTOR**

(30) Priority: 26.04.2022 CN 202210451054
(71) Applicant: Kede Numerical Control Co., Ltd., Dalian, Liaoning 116000 (CN)
(72) Inventor: CHEN, Yufeng, Dalian, Liaoning 116000 (CN); HOU, Yanbo, Dalian, Liaoning 116000 (CN); DU, Changlin, Dalian, Liaoning 116000 (CN); REN, Zhihui, Dalian, Liaoning 116000 (CN); SONG, Mingshan, Dalian, Liaoning 116000 (CN); CAI, Chungang, Dalian, Liaoning 116000 (CN); FAN, Chunhong, Dalian, Liaoning 116000 (CN); GUO, Cuijuan, Dalian, Liaoning 116000 (CN); WANG, Lianyang, Dalian, Liaoning 116000 (CN); LI, Yapeng, Dalian, Liaoning 116000 (CN); HE, Xingjian, Dalian, Liaoning 116000 (CN); GONG, Xinglin, Dalian, Liaoning 116000 (CN); BAO, Wenlu, Dalian, Liaoning 116000 (CN)
(74) Representative: JD&P Patent Attorneys Joanna Dargiewicz & Partners
(86) International application number: PCT/CN2022/136821
(87) International publication number: WO 2023/207100

(57) **Abstract**

The present invention discloses a motor rear-mounted direct drive spindle, including: a spindle housing; a mandrel that is rotatably disposed within the spindle housing; a bearing; and a torque motor, wherein the bearing includes a first bearing and a second bearing that provide radial and axial support to the mandrel, the first bearing and the second bearing are disposed inside the spindle housing, one end of the mandrel extends outside the spindle housing, the torque motor and the spindle housing are axially aligned, the torque motor includes a rotor and a stator, the end of the mandrel located outside the spindle housing is inserted into and connected to an end of the rotor, and the rotor is fixedly connected to the mandrel. The present invention discloses a motor rear-mounted direct drive spindle, where a motor with the motor rear-mounted spindle is entirely exposed outside, thus distancing the motor from a mandrel, improving heat dissipation, and reducing thermal elongation of a spindle.

## Description

### Technical Field

The present invention relates to the technical field of machining tools, specifically a motor rear-mounted direct drive spindle.

### Background Art

An electric spindle is an electromechanical functional component that integrates a spindle motor inside to achieve power conversion and output. It is characterized by its compact structure and suitability for high-speed cutting operations.

Currently, a built-in motor of the electric spindle is mounted between two sets of supporting bearing components. During high-speed operation, the heat generated by the stator and rotor of the built-in motor significantly impacts the bearings and the output end of the electric spindle, deteriorating the working conditions of the output end bearings, causing poor heat dissipation of the mandrel, and leading to large thermal elongation of the spindle.

Therefore, there is an urgent need to propose a motor spindle structure that addresses the poor heat dissipation of the mandrel and the large thermal elongation of the spindle caused by the mid-mounted motor structure during high-speed operation from the perspective of mechanical structure and spindle balance.

### Summary of Invention

The present invention discloses a motor rear-mounted direct drive spindle, where a motor with the motor rear-mounted spindle is entirely exposed outside, thus distancing the motor from a mandrel, improving heat dissipation, and reducing thermal elongation of a spindle.

To achieve the above objectives, the technical solution of the present invention is:
a motor rear-mounted direct drive spindle, including: a spindle housing; a mandrel that is rotatably disposed within the spindle housing; a bearing; and a torque motor, wherein the bearing includes a first bearing and a second bearing that provide radial and axial support to the mandrel, the first bearing and the second bearing are disposed inside the spindle housing, one end of the mandrel extends outside the spindle housing, the torque motor and the spindle housing are axially aligned, the torque motor includes a rotor and a stator, the end of the mandrel located outside the spindle housing is inserted into and connected to an end of the rotor, and the rotor is fixedly connected to the mandrel.

Further, the rotor is provided with a connecting disc in a radial direction, a connecting bolt is provided on the connecting disc, and when an end face of the mandrel contacts the connecting disc, the connecting bolt connects the mandrel and the connecting disc.

Further, a heat insulation ring or a labyrinth structure is provided between the torque motor and the spindle housing.

Further, the labyrinth structure is arranged on a side of the heat insulation ring facing the torque motor.

Further, one end of the rotor away from the mandrel is provided with a brake disc and a plurality of clamps which are arranged in a multipoint symmetric pattern along a circumferential direction of the brake disc.

Further, the brake disc is made of a special steel and has a thickness of 1 mm, forming a brake disc structure with a certain deformation capability.

Further, a dynamic balance probe is provided at one end of the spindle housing away from the torque motor, the dynamic balance probe can detect an imbalance amount of the mandrel after mounting a workpiece, and an adjustment mechanism which is capable of adjusting a dynamic balance according to a measurement result of the dynamic balance probe is provided at the end of the mandrel.

Further, the adjustment mechanism includes a balance disc and a plurality of balance adjustment blocks which are slidingly connected to the balance disc respectively, a set screw is provided between the balance adjustment blocks and the balance disc, and the set screw is threadedly connected to the balance adjustment blocks.

The balance disc is provided with a scale, and the balance adjustment blocks are provided with indicating arrows.

Further, an annular sliding groove is provided on the balance disc, an inner diameter of the sliding groove gradually increases from an opening end of the sliding groove to a bottom wall of the sliding groove, and the balance adjustment blocks are trapezoidal.

Further, a cooling water channel for cooling the first bearing is provided on the spindle housing.

### Advantageous Effects of Invention

The beneficial effects of the motor rear-mounted direct drive spindle according to the present invention are as follows.

1. By adopting a motor rear-mounted design, the torque motor is entirely exposed outside the spindle housing. As the mandrel needs to run-in during normal operation, when a temperature rise of the mandrel is constant, the heat generated is equal to the heat dissipated, the heat of the first bearing and the heat of the second bearing in the rear-mounted motor structure reach a steady state through the heat dissipation of the spindle housing, resulting in a constant temperature with a low temperature rise and thus achieving small thermal elongation of the spindle.
2. Due to the advantages of the torque motor, including small axial size, low inertia, light weight, rapid response, and low transmitted noise and vibration, the overall structure with the motor externally mounted has a small size difference compared to the overall structure with the motor mounted in the middle.

### Brief Description of Drawings

In order to illustrate the embodiments of the present invention or the technical solutions in the prior art more clearly, the following briefly introduces the accompanying drawings that need to be used in the description of the embodiments or the prior art. Obviously, the accompanying drawings in the following description are some embodiments of the present invention, and for a person skilled in the art, other drawings can also be obtained from these accompanying drawings without creative effort.

Fig. 1 is a schematic diagram of an overall structure of a motor rear-mounted direct drive spindle according to the present invention.
Fig. 2 is a partial exploded view of the motor rear-mounted direct drive spindle according to the present invention.
Fig. 3 is a top view of Fig. 1.
Fig. 4 is a sectional view along a line A-A in Fig. 3.
Fig. 5 is a top view of the motor rear-mounted direct drive spindle according to the present invention.
Fig. 6 is a sectional view along a line B-B in Fig. 5.
Fig. 7 is an enlarged view of a portion C in Fig. 6.
Fig. 8 is an enlarged view of a portion D in Fig. 6.

In the drawings: 1. torque motor; 11. rotor; 111. mounting flange; 112. encoder flange; 12. stator; 13. casing; 2. spindle housing; 3. mandrel; 41. first bearing; 42. second bearing; 51. inner spacer sleeve; 52. outer spacer sleeve; 6. cooling water channel; 61. water inlet channel; 62. water outlet channel; 71. connecting disc; 72. connecting bolt; 81. brake disc; 82. clamp; 9. cooling water system; 91. water-cooling joint; 10. heat insulation ring; 101. labyrinth structure; 20. dynamic balance probe; 30. adjustment mechanism; 301. balance disc; 3011. sliding groove; 3012. scale; 302. balance adjustment block; 303. set screw

### Description of Embodiments

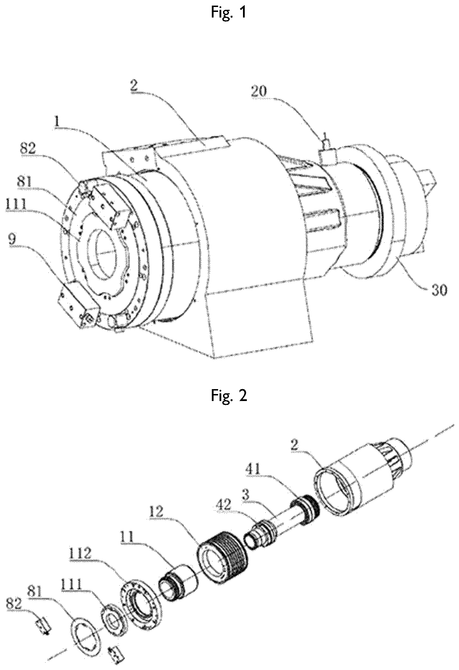

In order to make the purposes, technical solutions and advantages of the embodiments of the present invention clearer, the technical solutions in the embodiments of the present invention will be clearly and completely described below with reference to Figs. 1 to 8 in the embodiments of the present invention. Obviously, the embodiments to be described are some, but not all, embodiments of the present invention. Based on the embodiments of the present invention, all other embodiments obtained by a person skilled in the art without creative efforts are within the protection scope of the present invention.

A motor rear-mounted direct drive spindle, which is mounted on a numerical control machine tool, as shown in Fig. 1, includes a torque motor 1 and a spindle housing 2 arranged axially side by side. The spindle housing 2 has an installation cavity on a side facing the torque motor 1. An end of the torque motor 1 is inserted into and connected to the spindle housing 2, and the torque motor 1 and spindle housing 2 are connected together by screws, forming a main motor rear-mounted structure, reducing the mutual thermal impact between the motor and bearings. Thus, the torque motor 1 is entirely exposed outside the spindle housing 2, ensuring the heat dissipation of the torque motor 1. Additionally, the torque motor 1 has the advantages of small axial size, low inertia, light weight, rapid response, and low transmitted noise and vibration, ensuring the overall volume after assembly is relatively small.

As shown in Figs. 1 and 2, the spindle housing 2 is a fully enclosed cylinder, the spindle housing 2 has a circular through hole along its axis, a mandrel 3 is mounted at the circular through hole of the spindle housing 2, and an end of the mandrel 3 close to the torque motor 1 extends outside the spindle housing 2 and connects to the torque motor 1, enabling the torque motor 1 to drive the mandrel 3 to rotate when the torque motor 1 is started.

As shown in Figs. 1 and 2, bearings are mounted inside the spindle housing 2. The bearings include a first bearing 41 and a second bearing 42 that provide radial and axial support to the mandrel 3. The first bearing 41 is mounted at an end of the mandrel 3 away from the torque motor 1, while the second bearing 42 is mounted at an end of the mandrel 3 close to the torque motor 1. The rotation of the mandrel 3 relative to the spindle housing 2 is implemented through the cooperation of the first bearing 41 and the second bearing 42. The two axial sides of the first bearing 41 and the two axial sides of the second bearing 42 are respectively provided with an inner spacer sleeve 51 and an outer spacer sleeve 52. The inner spacer sleeve 51 of the first bearing 41 and the outer spacer sleeve 52 of the second bearing 42 are of an integrated structure. Under the action of the inner spacer 51 and the outer spacer sleeve 52, the positions of the bearings are restricted.

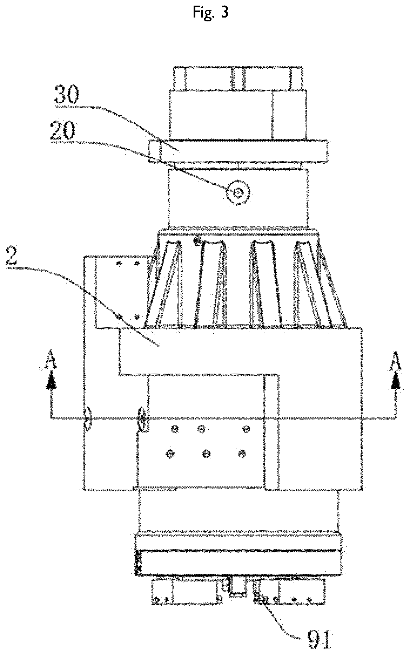

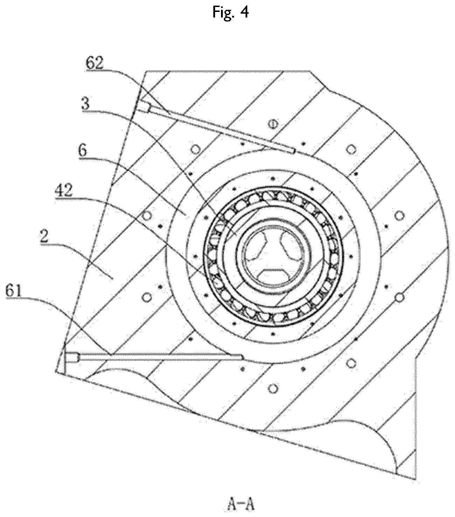

As shown in Figs. 3 and 4, the spindle housing 2 is provided with a cooling water channel 6 that can cool the second bearing 42. The cooling water channel 6 is annularly arranged and surrounds the second bearing 42. The cooling water channel 6 includes an water inlet channel 61 and an water outlet channel 62. The water inlet channel 61 and the water outlet channel 62 are respectively located on the lower and upper sides of the spindle housing 2. The water inlet channel 61 is positioned below the spindle housing 2, while the water outlet channel 62 is positioned above the spindle housing 2. Both the water inlet channel 61 and the water outlet channel 62 are arranged in an inclined manner, enabling the cooling of the second bearing 42 and thereby reducing the thermal elongation of the mandrel 3.

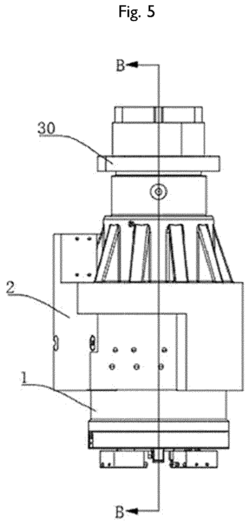

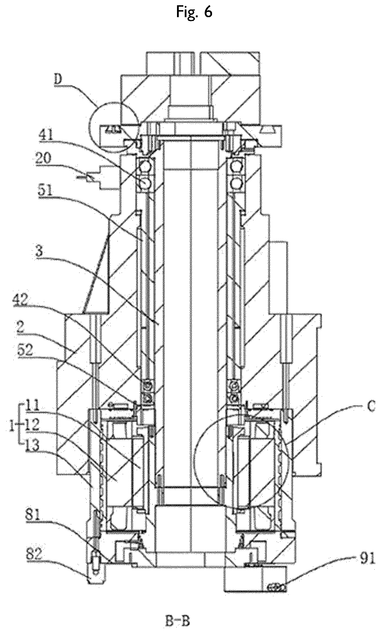

As shown in Figs. 5 and 6, the torque motor 1 includes a rotor 11, a stator 12, and a casing 13. The stator 12 is fixedly connected to the casing 13.

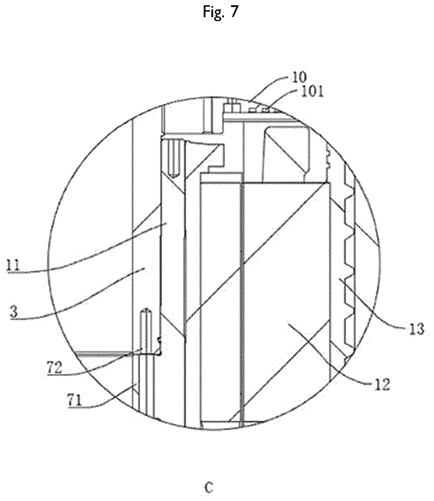

As shown in Figs. 6 and 7, the rotor 11 has an insertion cavity in the axial direction. The end of the mandrel 3 is inserted into and connected to the insertion cavity. The rotor 11 has an annular connecting disc 71 extending inwardly in the radial direction of the rotor 11. The end face of the connecting disc 71 is flush with the end face of the mandrel 3. The connecting disc 71 is provided with a plurality of connecting bolts 72, which are arranged along the circumferential direction of the connecting disc 71 at equal intervals. During assembly, the end of the mandrel 3 outside the spindle housing 2 is inserted into and connected to the rotor 11. Under the action of the connecting disc 71 and the connecting bolts 72, the mandrel 3 and the rotor 11 are fixedly connected together, achieving the rotational drive of the mandrel 3. Since both the mandrel 3 and the rotor 11 of the torque motor 1 need to run-in during rotation, the rotor 11 and the mandrel 3 heat up steadily and the heat generated is equal to the heat dissipated, and by mounting the torque motor 1 at the rear, it is easier for the torque motor 1 to dissipate heat, keeping the temperature stable and the temperature rise low, thus reducing the thermal elongation of the mandrel 3.

As shown in Figs. 2 and 6, a brake disc 81 is fixedly provided on a side of the torque motor 1 away from the spindle housing 2. The brake disc 81 is an annular disc-shaped structure made of special steel. The thickness of the brake disc 81 is preferably 1 mm, and thereby, a structure of the brake disc 81 having a certain deformation capability is constituted such that the brake disc 81 is an elastomer. An end of the rotor 11 away from the mandrel 3 is fixedly provided with a mounting flange 111 and an encoder. The encoder is fixedly provided at the end of the rotor 11 through an encoder flange 112. The brake disc 81 and the mounting flange 111 are connected together by screws, making the brake disc 81 and the rotor 11 integrally rigidly connected.

As shown in Figs. 2 and 6, a plurality of clamps 82 is arranged in a circumferential direction of the brake disc 81, and the clamps 82 are arranged in a multipoint symmetric pattern along the circumferential direction of the brake disc 81. Each pair of clamps 82 forms a group, and a plurality of groups of clamps 82 is arranged in the circumferential direction of the brake disc 81. In the present embodiment, taking one group of clamps 82 as an example, the two clamps 82 in the same group are symmetrically arranged with respect to the center of the brake disc 81. The clamps 82 are preferably high-precision clamps 82, and more preferably hydraulic clamps 82. When the brake disc 81 receives a locking command, hydraulic oil enters to lock the clamps 82, and the clamps 82 are pushed by the hydraulic oil to compress the brake disc 81. A locking torque is generated by the friction between the brake disc 81 and the clamps 82. During the locking process, the clamps 82 push the brake disc 81 slightly forward to make the brake disc 81 and the rotor 11 fit together. The brake disc 81, which is an elastomer, deforms at this time, while the rotor 11 does not undergo radial deformation, thereby preventing the mandrel 3 from radial deformation. If the brake disc 81 were rigid enough, the braking force would cause radial deformation of the rotor 11 and the mandrel 3, leading to bearing load and severely affecting bearing life.

As shown in Figs. 2 and 6, the torque motor 1 is also provided with a cooling water system 9 that can cool the stator 12. The cooling water system 9 includes a water-cooling joint 91 and a water-cooling pipeline. A cooling liquid is introduced into the water-cooling pipeline through the water-cooling joint 91 to cool the stator 12.

As shown in Figs. 6 and 7, an annular heat insulation ring 10 is arranged between the torque motor 1 and the spindle housing 2, with the heat insulation ring 10 being connected to the spindle housing 2 by screws. A side of the heat insulation ring 10 facing the torque motor 1 is provided with a labyrinth structure 101, which consists of a plurality of annular grooves arranged in a spiral pattern. These annular grooves are concentrically arranged, making it difficult for the heat generated by the torque motor 1 to transfer to the spindle housing 2, further reducing the thermal impact between the motor and the bearings.

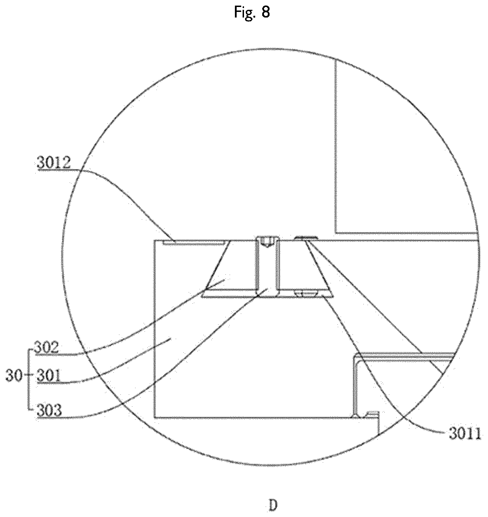

Currently, the mandrel 3 only performs dynamic balance detection and adjustment on the mandrel 3 shaft system. When the user processes workpieces with uneven raw materials, machining such parts generates vibrations, making it difficult to increase the rotational speed of the mandrel 3 and causing significant damage to the bearings of the mandrel 3. To solve this problem, as shown in Figs. 6 and 8, a dynamic balance probe 20 and an adjustment mechanism 30 are arranged on a side of the spindle housing 2 away from the torque motor 1. The dynamic balance probe 20 is preferably a high-precision dynamic balance detector for machine tools, featuring functions such as harmonic vibration analysis. The dynamic balance probe 20 can perform real-time analysis of unbalanced vibrations of the mandrel 3 and detect an imbalance amount of the mandrel 3 after a workpiece is mounted.

As shown in Figs. 6 and 8, the adjustment mechanism 30 includes a circular balance disc 301 and balance adjustment blocks 302. The balance disc 301 can adjust the dynamic balance according to the measurement results of the dynamic balance probe 20. The balance disc 301 is in an annular disc shape, parallel to the brake disc 81, and connected to the mandrel 3 by screws.

As shown in Figs. 6 and 8, an annular sliding groove 3011 is provided on a side of the balance disc 301 facing away from the spindle housing 2. The sliding groove 3011 is arranged at an edge of the balance disc 301, and the inner diameter of the sliding groove 3011 gradually increases from an opening end of the sliding groove 3011 to a bottom wall of the sliding groove 3011. At this time, the axial section of the sliding groove 3011 is trapezoidal. A plurality of balance adjustment blocks 302 is arranged along the circumferential direction of the balance disc 301 at equal intervals, allowing for the balancing of different workpiece eccentricities.

As shown in Figs. 6 and 8, the balance adjustment blocks 302 are arranged in a trapezoidal shape and embedded in the sliding groove 3011, such that the balance adjustment blocks 302 and the sliding groove 3011 form a dovetail joint. The balance adjustment blocks 302 are slidably connected to the balance disc 301. By adjusting the positions of different balance adjustment blocks 302 on the balance disc 301, the center of gravity of the balance disc 301 can be adjusted.

As shown in Figs. 6 and 8, threaded holes are provided on the balance adjustment blocks 302, and set screws 303 are inserted through the threaded holes. The set screws 303 are threadedly connected to the balance adjustment blocks 302, with the ends of the set screws 303 passing through the balance adjustment blocks 302 and contacting the bottom wall of the sliding groove 3011. By locking the balance adjustment blocks 302 with the set screws 303, the center of gravity of the balance disc 301 can be adjusted.

As shown in Figs. 6 and 8, the edge of the balance disc 301 is provided with a scale 3012, and the balance adjustment blocks 302 are provided with arrows that can indicate the scale 3012. The arrows are located at the centers of the balance adjustment blocks 302. When connecting a workpiece, the eccentricity of the workpiece weight causes vibrations in the mandrel 3, making it difficult for the mandrel 3 to reach a high rotational speed and causing significant damage to the bearings of the mandrel 3. By adding the dynamic balance probe 20 and the adjustment mechanism 30, the dynamic balance of the spindle shaft system can be adjusted according to the incremental amounts of detected data. The balance adjustment blocks 302 can be locked with set screws 303, making installation convenient. The higher the rotational speed of the mandrel 3, the more tightly the balance adjustment blocks 302 adhere due to centrifugal force.

The working principle of this application is as follows. The motor is rear-mounted, exposing the entire torque motor 1 outside the spindle housing 2 and forming a main motor rear-mounted structure. This structure reduces the mutual thermal impact between the motor and the bearings. One end of the mandrel 3 close to the torque motor 1 extends outside the spindle housing 2 and is connected to the torque motor 1. While achieving the rotational drive of the mandrel 3, the torque motor 1 and the mandrel 3 are separated from each other. Since both the mandrel 3 and the rotor 11 of the torque motor 1 need to run-in during rotation, the rotor 11 and the mandrel 3 heat up steadily and the heat generated is equal to the heat dissipated, and by mounting the torque motor 1 at the rear, it is easier for the torque motor 1 to dissipate heat, keeping the temperature stable and the temperature rise low, thus reducing the thermal elongation of the mandrel 3. This fundamentally changes the structural characteristics of the electric spindle, ensuring that the heat dissipated by the torque motor 1 has minimal thermal impact on the output end of the mandrel 3 during normal operation of the electric spindle.

Finally, it should be noted that: the above embodiments are only used to illustrate the technical solutions of the present invention, but not to limit them; although the present invention has been described in detail with reference to the foregoing embodiments, a person skilled in the art should understand that: the technical solutions described in the foregoing embodiments can still be modified, or some or all of the technical features thereof can be equivalently substituted. However, these modifications or substitutions do not make the essence of the corresponding technical solutions deviate from the scope of the technical solutions of the embodiments of the present invention.

## Claims

1. A motor rear-mounted direct drive spindle, comprising:
a spindle housing (2);
a mandrel (3) that is rotatably disposed within the spindle housing (2);
a bearing; and
a torque motor (1), wherein
the bearing includes a first bearing (41) and a second bearing (42) that provide radial and axial support to the mandrel (3), the first bearing (41) and the second bearing (42) are disposed inside the spindle housing (2), one end of the mandrel (3) extends outside the spindle housing (2), the torque motor (1) and the spindle housing (2) are axially aligned, the torque motor (1) includes a rotor (11) and a stator (12), the end of the mandrel (3) located outside the spindle housing (2) is inserted into and connected to an end of the rotor (11), and the rotor (11) is fixedly connected to the mandrel (3).

2. The motor rear-mounted direct-drive spindle according to claim 1, wherein the rotor (11) is provided with a connecting disc (71) in a radial direction, a connecting bolt (72) is provided on the connecting disc (71), and when an end face of the mandrel (3) contacts the connecting disc (71), the connecting bolt (72) connects the mandrel (3) and the connecting disc (71).

3. The motor rear-mounted direct-drive spindle according to claim 1, wherein a heat insulation ring (10) or a labyrinth structure (101) is provided between the torque motor (1) and the spindle housing (2).

4. The motor rear-mounted direct-drive spindle according to claim 3, wherein the labyrinth structure (101) is arranged on a side of the heat insulation ring (10) facing the torque motor (1).

5. The motor rear-mounted direct-drive spindle according to claim 1, wherein one end of the rotor (11) away from the mandrel (3) is provided with a brake disc (81) and a plurality of clamps (82) which are arranged in a multipoint symmetric pattern along a circumferential direction of the brake disc (81).

6. The motor rear-mounted direct-drive spindle according to claim 5, wherein the brake disc (81) is made of a special steel and has a thickness of 1 mm, forming a brake disc (81) structure with a certain deformation capability.

7. The motor rear-mounted direct-drive spindle according to claim 1, wherein a dynamic balance probe (20) is provided at one end of the spindle housing (2) away from the torque motor (1), the dynamic balance probe (20) can detect an imbalance amount of the mandrel (3) after mounting a workpiece, and an adjustment mechanism (30) which is capable of adjusting a dynamic balance according to a measurement result of the dynamic balance probe (20) is provided at the end of the mandrel (3).

8. The motor rear-mounted direct-drive spindle according to claim 7, wherein the adjustment mechanism (30) includes a balance disc (301) and a plurality of balance adjustment blocks (302) which are slidingly connected to the balance disc (301) respectively, a set screw (303) is provided between the balance adjustment blocks (302) and the balance disc (301), and the set screw (303) is threadedly connected to the balance adjustment blocks (302), and the balance disc (301) is provided with a scale (3012), and the balance adjustment blocks (302) are provided with indicating arrows.

9. The motor rear-mounted direct-drive spindle according to claim 8, wherein an annular sliding groove (3011) is provided on the balance disc (301), an inner diameter of the sliding groove (3011) gradually increases from an opening end of the sliding groove (3011) to a bottom wall of the sliding groove (3011), and the balance adjustment blocks (302) are trapezoidal.

10. The motor rear-mounted direct-drive spindle according to claim 1, wherein a cooling water channel (6) for cooling the first bearing (41) is provided on the spindle housing (2).
